# EUROPÄISCHE PATENTSCHRIFT

(11) **EP 0 376 066 B1**
(45) Veröffentlichungstag und Bekanntmachung des Hinweises auf die Patenterteilung: **30.08.1995**
(21) Anmeldenummer: 89123084.9
(22) Anmeldetag: 14.12.1989
(51) Int. Cl.: A61G 12/00, H01H 9/00

(54) **Bediengerät**
Control apparatus
Appareil de commande

(30) Priorität: 16.12.1988 DE 3842365
(43) Veröffentlichungstag der Anmeldung: 04.07.1990
(73) Patentinhaber: Telehotel TV-Systeme GmbH, 40789 Monheim (DE)
(72) Erfinder: Berger-Agathangelidis, Reimar, Dipl.-Ing, D-40593 Düsseldorf (DE); Börgens, Markus, D-4000 Düsseldorf (DE)
(74) Vertreter: Patentanwälte Hauck, Graalfs, Wehnert, Döring, Siemons

(56) Entgegenhaltungen:
- GB-A- 848 360
- US-A- 3 942 751
- US-A- 4 183 015
- US-A- 4 647 980

## Beschreibung

Die vorliegende Erfindung betrifft ein als bewegliche bzw. begrenzt bewegliche Einheit ausgebildetes Bediengerät mit den Merkmalen des Oberbegriffs des Patentanspruchs 1.

Derartige Bediengeräte sind beispielsweise als Fernsteuergeräte für Fernsehapparate etc. bekannt. Hierbei wird ein einziges Gerät durch das Bediengerät angesteuert. Bei Krankenhäusern sind ferner Bediengeräte bekannt, mit denen man beispielsweise Krankenhausbetten verstellen kann. Auch hierbei ist das Bediengerät ausschließlich zur Ansteuerung eiens einzigen Gerätes bestimmt. Je nach der Art der Ansteuerung sind diese Geräte entweder völlig unabhängig vom anzusteuernden Gerät oder über entsprechende Kabel mit diesem verbunden. Es ist ferner in Krankenhäusern oder Hotels bekannt, stationäre Bedienungseinrichtungen vorzusehen, mit denen beispielsweise Radios oder Fernsehgeräte angesteuert und Signale abgegeben werden können, um Bedienungs- bzw. Pflegepersonal zu rufen.

Aus der US-A-4 183 015 ist ein Bediengerät mit den Merkmalen des Oberbegriffs des Patentanspruchs 1 bekannt. Dieses bekannte Bediengerät besitzt ein Gehäuse, das sich aus einem Unterabschnitt, einem Oberabschnitt, einem hinteren Abschnitt, einem vorderen Abschnitt und einem Zwischenabschnitt zusammensetzt. Am Unterabschnitt sind Arme angeordnet, die das Bediengerät tragen. Am Vorderabschnitt des Gehäuses sind diverse Steuereinrichtungen vorgesehen, die beispielsweise eine Ruftaste, Lichttasten, Steuerschalter zum Auf- und Abbewegen des Bettes umfassen.

Der Erfindung liegt die Aufgabe zugrunde, ein Bediengerät der angegebenen Art zu schaffen, das bei guter räumlicher Anpassung und einfacher rationeller Bauweise besonders vielseitig einsetzbar sowie variierbar bzw. erweiterbar ist.

Diese Aufgabe wird erfindungsgemäß bei einem Bediengerät der angegebenen Art dadurch gelöst, daß
das Gehäuse in Modulbauweise erstellt ist und einen die Vielzahl der Funktionstasten aufweisenden kastenförmigen Hauptmodul und mindestens einen weiteren, austauschbaren und seitlich lösbar am Hauptmodul befestigten leistenförmigen Nebenmodul aufweist, der entweder als Zwischenmodul oder als Abschlußmodul ausgebildet ist,

im bzw. am Hauptmodul selbst mindestens ein Gerät angeordnet ist, dessen Funktion durch manuelle Tastenbedienung gesteuert wird, und
der Nebenmodul ebenfalls ein Gerät, dessen Funktion durch die manuelle Tastenbedienung gesteuert wird, und/oder ein unabhängiges Zusatzgerät enthält.

Die erfindungsgemäße Lösung geht somit davon aus, das Bediengerät ähnlich wie die bekannten mobilen steuergeräte als bewegliche bzw. begrenzt bewegliche unabhängige Einheit auszubilden, so daß der Benutzer das Gerät an beliebigen Punkten eines Raumes benutzen kann. Dies kann einerseits dadurch erreicht werden, daß das Gerät als voll bewegliches Bediengerät ausgebildet ist, bei dem allenfalls eine Kabelverbindung mit einem stationären Punkt besteht, oder als an einer Halterung angebrachtes Bediengerät, bei dem die Halterung entsprechende Freiheitsgrade der Bewegung des Bediengerätes ermöglicht. Die zuletzt genannte Lösung, bei der das Bediengerät an einer Halterung angeordnet ist, hat den Vorteil, daß das Gerät nicht manuell gehaltert werden muß, wenn beispielsweise die Funktionstasten betätigt werden oder weitere Funktionen des Gerätes genutzt werden. Diese Lösung wird daher bevorzugt und ist insbesondere für Hotels oder Krankenhäuser geeignet, bei denen das Bediengerät so verschwenkbar angebracht ist, daß es vom bettlägerigen Patienten bzw. im Hotelbett befindlichen Hotelgast benutzt werden kann. Der Patient bzw. Gast hat dabei die Möglichkeit, das Bediengerät in eine für ihn bequeme Lage zur Benutzung zu bewegen. Es versteht sich, daß dabei die Halterung entsprechende Bewegungsmöglichkeiten des Gerätes gestatten muß. Hierauf wird später eingegangen werden.

Die erfindungsgemäße Lösung ist dadurch gekennzeichnet, daß das Gehäuse des Bediengerätes in Modulbauweise erstellt ist. Es findet dabei ein kastenförmiger Hauptmodul Verwendung, an dem mindestens ein leistenförmiger Nebenmodul lösbar befestigt ist. Diese Nebenmodulen sind austauschbar, so daß an einen Hauptmodul verschiedene Nebenmodulen anschließbar sind. Desweiteren sind die Nebenmodulen entweder als Zwischenmodul oder Abschlußmodul ausgebildet, so daß auch mehrere Nebenmodulen hintereinander an einem Hauptmodul befestigt sein können. Durch diese Bauweise ist es möglich, Standardteile zu fertigen, die sich zu entsprechenden Gesamtgeräten zusammenstellen lassen, je nach den speziellen Anforderungen.

Ein weiterer wesentlicher Aspekt der Erfindung besteht darin, daß das Bediengerät als kombiniertes Gerät ausgebildet ist, mit dem sowohl entfernt angeordnete Geräte bedient werden als auch im Bediengerät selbst untergebrachte Geräte, wie beispielsweise ein Fernseher, ein Radio, angesteuert werden. Desweiteren sind - je nach Anwendungsfall - im Bediengerät Zusatzgeräte untergebracht, die nicht über die vorhandenen Funktionstasten angesteuert werden, sondern davon unabhängig sind. Diese Zusatzgeräte sind im Nebenmodul oder in mehreren Nebenmodulen untergebracht.

Durch die erfindungsgemäße Lösung wird somit eine Vielzahl von Geräten und Bedienungsfunktionen in einem einzigen Gerät untergebracht, das eine größtmögliche Mobilität und Anpassungsfähigkeit an den jeweiligen Anwendungsfall besitzt. Durch den standardisierten Aufbau des Gerätes - Unterteilung in einen Hauptmodul und Nebenmodulen - lassen sich nach dem Baukastenprinzip die verschiedensten Gerätevarianten herstellen, wobei sich verschiedenartig ausgebildete Hauptmodulen mit verschiedenartigen Nebenmodulen beliebig koppeln lassen.

Der kastenförmige Hauptmodul besitzt vorzugsweise eine obere und eine untere Schale, die in geeigneter Weise aneinander befestigt sind. Als bevorzugte Befestigungsmöglichkeit für den Nebenmodul hat sich eine kombinierte Steck- bzw. Klemmverbindung und Schraubverbindung erwiesen, die einen verhältnismäßig einfachen An- und Abbau des Nebenmoduls bei sicherer Halterung desselben am Hauptmodul gestattet. Die Klemm- bzw. Steckverbindung ist dadurch verwirklicht, daß an der entsprechenden Seitenfläche des Hauptmoduls sowie der Seitenfläche des Nebenmoduls vorstehende Klemmflansche angeordnet sind, die in Klemmsitz in Vertiefungen der entsprechenden Gegenfläche eingreifen. Beim Ansetzen des Nebenmoduls an den Hauptmodul wird daher zuerst der Nebenmodul auf die entsprechenden Klemmflansche gesteckt, so daß eine Klemmverbindung hergestellt wird. Danach wird der Nebenmodul mit Hilfe von Schrauben, die die entsprechenden Seitenflächen durchdringen, endgültig am Hauptmodul befestigt.

Je nach ihrer Funktion und dem Gerät, das in ihnen untergebracht ist, besitzen die Nebenmodulen unterschiedliche Formen. Sie sind jedoch im großen und ganzen immer leistenförmig ausgebildet und weisen die gleiche Höhe auf wie der Hauptmodul, so daß die Nebenmodulen nach ihrer Befestigung oben und unten mit dem Hauptmodul fluchten. Die Breite der Nebenmodulen ist je nach Gerät und Funktion unterschiedlich. Es gibt Zwischenmodulen und Abschlußmodulen, je nachdem, ob mehrere Nebenmodulen hintereinander angeordnet werden sollen oder ob der Nebenmodul das Endglied einer Reihe bildet. In der Regel sind jedoch alle Nebenmodulen im Schnitt etwa C-förmig ausgebildet und übergreifen mit ihren Randflanschen von der Seitenfläche des Hauptmoduls im Abstand vom Rand vorstehende Klemmflansche, derart, daß die Randflansche des Nebenmoduls und die Vorder- und Rückfläche des Hauptmoduls bündig sind. Damit ergibt sich nach dem Zusammenbau ein einheitliches kastenförmiges Gebilde, das sich aus dem kastenförmigen Hauptmodul und mindestens einem leistenförmigen Nebenmodul zusammensetzt. Es versteht sich, daß an beiden Seiten des Hauptmoduls Nebenmodulen angeordnet sein können. Bei einer einseitigen Anordnung von Nebenmodulen ist auf der gegenüberliegenden Seite des Hauptmoduls vorzugsweise ein Abschlußmodul angeordnet. Für diesen Fall kann jedoch der Hauptmodul auch selbst mit einer geeigneten Abschlußwand versehen sein.

Bei der Ausbildung des Nebenmoduls als Abschlußmodul gehen die Randflansche rechtwinklig in eine Abschluß- bzw. Abdeckwand über, während bei der Ausbildung als Zwischenmodul die Wandflansche rechtwinklig in eine Zwischenwand übergehen, die im Abstand vom Rand mit entsprechenden vorstehenden Klemmflanschen versehen ist. Mit Hilfe dieser Klemmflansche läßt sich ein weiterer Nebenmodul anschließen.

Wie vorstehend erwähnt, erfolgt die endgültige Verbindung der Modulen aneinander vorzugsweise mit Hilfe von Schrauben. Zur Anbringung der Schrauben sind in den Abschlußwänden bzw. Zwischenwänden entsprechende Bohrungen vorgesehen, oder die Modulen weisen Halteplatten auf, die mit Schraubenbohrungen versehen sind. Diese Halteplatten können eine begrenzte Ausdehnung aufweisen, um den in den Modulen enthaltenen Raum nicht zu verringern.

In der vorstehend geschilderten weise können somit "Terminals" beispielsweise für Patienten oder Hotelgäste zusammengestellt werden. Als Beispiel für den Aufbau von derartigen Terminals sei hier folgendes genannt: Der Hauptmodul kann beispielsweise einen TV-Bildschirm, mindestens einen Lautsprecher, die Funktionstasten und eine Karteneingabe/ausgabe-Einheit aufweisen. Die Funktionstasten sind vorzugsweise in Form einer Tastenmatrix ausgebildet. Diese Tastenmatrix kann die entsprechenden Bedientasten für einen LCD-Farbfernseher und ein Radio enthalten. Desweiteren ist vorzugsweise eine gesonderte Ruftaste vorgesehen, mit der Personal herbeigerufen werden kann. Je nach der Art und Zahl der vorhandenen Nebenmodulen besitzt der Hauptmodul ferner entsprechende Funktionstasten zur Bedienung der in diesen Nebenmodulen untergebrachten Geräte. Wenn beispielsweise ein Nebenmodul als Lampenhalterung mit Lampe ausgebildet ist, weist der Hauptmodul eine oder mehrere Funktionstasten zur Bedienung dieser Lampe auf. Bei einer weiteren bevorzugten Ausführungsform der Erfindung ist ein Nebenmodul als Telefon mit entsprechender Halterung ausgebildet. Das zugehörige Tastenfeld für das Telefon kann ebenfalls am Hauptmodul angeordnet sein, sich jedoch auch am Nebenmodul, d.h. am Hörer selbst, befinden. Weitere Funktionstasten am Hauptmodul sind beispielsweise Bedientasten für die erwähnte Karteneingabe/ausgabe-Einheit. Über diese Einheit können beispielsweise Codes eingegeben werden, die bestimmte Gerät in Funktion setzen. Ferner können Bedientasten für einen Drucker vorgesehen sein.

Die vorstehend aufgeführten Geräte und Funktionen sind lediglich beispielhaft. Es versteht sich, daß das erfindungsgemäß ausgebildete Bediengerät hierauf nicht beschränkt ist. So kann das Bediengerät eine Vielzahl von weiteren Geräten und Funktionen enthalten bzw. besitzen, die entweder im Hauptmodul oder in den Nebenmodulen untergebracht sein können. Als Beispiel hierfür seien genannt: weitere Ruftasten für Menüwahl, Filmwahl etc., Bedientasten für eine Gegensprechanlage, Anschlußmöglichkeiten für einen Datenaustausch mit Diagnosegeräten, ein Lesegerät für EEPROM-Karten, Bedientasten für externe Geräte bzw. Funktionen, wie beispielsweise das Raumlicht, die Raumheizung etc., eine integrierte Kamera (CCD) zur Patientenüberwachung, Anschlüsse für Ferndiagnose, Temperaturdiagnose, weitere Kartenleser etc.

Wie bereits eingangs erwähnt, weist eine besonders bevorzugte Lösung des erfindungsgemäß ausgebildeten Bediengerätes eine Halterung zur Befestigung an einer Wand u. dgl. auf, die als Gelenkgestänge ausgebildet ist. Diese Halterung soll ermöglichen, daß das Bediengerät einerseits in einer manuell eingestellten Lage fixiert wird, und andererseits eine möglichst große Bewegungsfreiheit des Bediengerätes gestatten. Hierzu weist das Gelenkgestänge bzw. der Schwenkarm zweckmäßigerweise vier Gelenke auf, von denen ein Gelenk am Positionierungsort des Gestänges an einer Wand u. dgl. angeordnet ist. Das zweite Gelenk ist ein mittleres Gelenk, während das dritte und vierte Gelenk in der Form eines Doppelgelenkes am Verbindungspunkt zwischen Gestänge und Bediengerät angeordnet sind. Dieses Doppelgelenk ermöglicht eine Drehung des Bediengerätes um seine Horizontalachse und um seine Vertikalachse. Die Verbindung zwischen Gelenkgestänge und Bediengerät ist derart bewerkstelligt, daß ein entsprechender Abschlußmodul eine mittige Bohrung besitzt, in der ein Gelenkzapfen des Doppelgelenkes drehbar, jedoch in der entsprechenden Drehstellung fixierbar gelagert ist. Hierdurch kann das Gerät um seine Horizontalachse gedreht werden. Der Gelenkzapfen weist in seiner Verlängerung eine senkrecht dazu angeordnete Gelenkscheibe auf, die mit einer anderen Gelenkscheibe am Gestänge drehbar zusammenwirkt. Mit Hilfe dieses Gelenkes läßt sich das Bediengerät um seine Vertikalachse bzw. um eine Vertikalachse im Raum verschwenken.

Es versteht sich, daß weitere Ausgestaltungen in bezug auf die Halterung möglich sind, wobei je nach den gestellten Anforderungen eine mehr oder weniger große Bewegungsfreiheit des Bediengerätes erreicht wird.

Um zu verhindern, daß die Halterung aus ihrem Befestigungspunkt herausreißt, wenn entsprechende äußere Kräfte auf das Bediengerät einwirken (sich beispielsweise ein Patient am Bediengerät abstützt), ist das Gelenkgestänge zweckmäßigerweise über eine Gasdruckmechanik an einer Wand u. dgl. befestigt, die zur Vernichtung der entsprechenden Energie führt.

Eine weitere Alternative der Erfindung zeichnet sich dadurch aus, daß die Halterung zur Befestigung des Gerätes an einer Wand u. dgl. an der Rückseite des Hauptmoduls montiert ist. Hierbei weist zweckmäßigerweise die Rückseite des Hauptmoduls eine Erhebung auf, an der ein Gestängearm der Halterung fixiert ist. Die Befestigung geschieht dabei vorzugsweise über eine auf der Erhebung angeordnete Metallplatte, mittels der und dem entsprechenden Gehäuseteil des Hauptmoduls der Gestängearm verschraubt ist. Der Montagepunkt ist dabei Vorzugsweise gelenkig ausgebildet, so daß das Gerät relativ zum Gestängearm gedreht und auch verschwenkt werden kann, wobei insbesondere ein Kugelgelenk Verwendung findet, das ein Verschwenken in alle Richtungen ermöglicht . Die Befestigung des Gerätes an der Rückseite des Hauptmoduls hat den Vorteil, daß hierdurch in keiner Weise die Anordnung von weiteren Nebenmodulen störend beeinflußt wird.

Die Erfindung wird nachfolgend anhand eines Ausführungsbeispiels in Verbindung mit der Zeichnung im einzelnen erläutert. Es zeigen:
- Figur 1: eine Vorderansicht eines erfindungsgenäß ausgebildeten Bediengerätes, wobei eine Alternative für die Ausbildung eines Nebenmoduls getrennt dargestellt ist;
- Figur 2: eine Unteransicht des Bediengerätes der Figur 1, wobei die Alternative für den Nebenmodul ebenfalls in der Unteransicht dargestellt ist;
- Figur 3: eine perspektivische Darstellung des Bediengerätes der Figuren 1 und 2 im ausgeschwenkten Zustand des Halterungsgestänges; und
- Figur 4: eine Explosionsdarstellung des Bediengerätes der Figuren 1 bis 3.

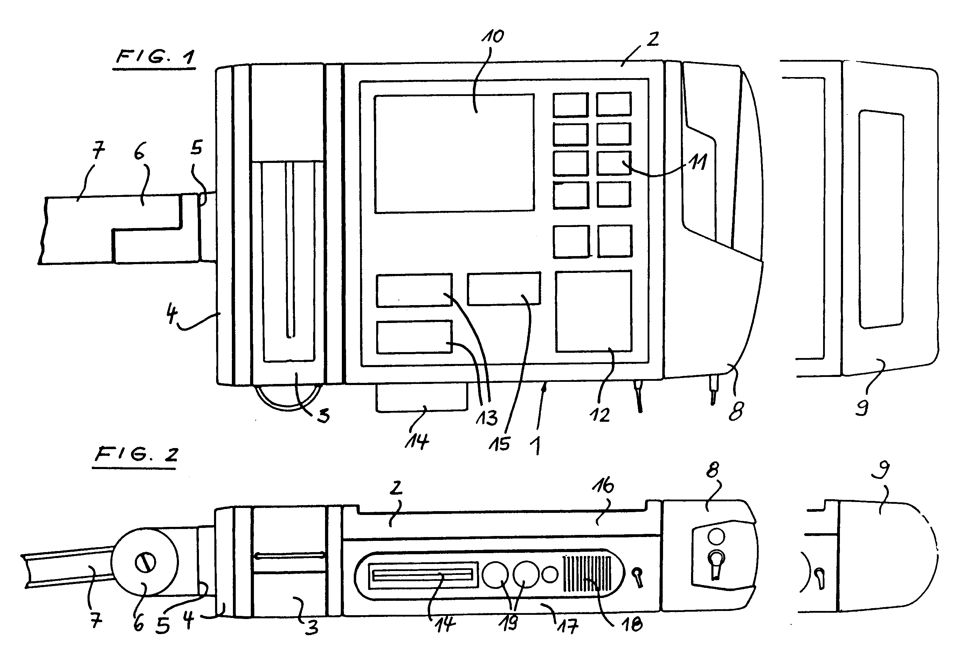

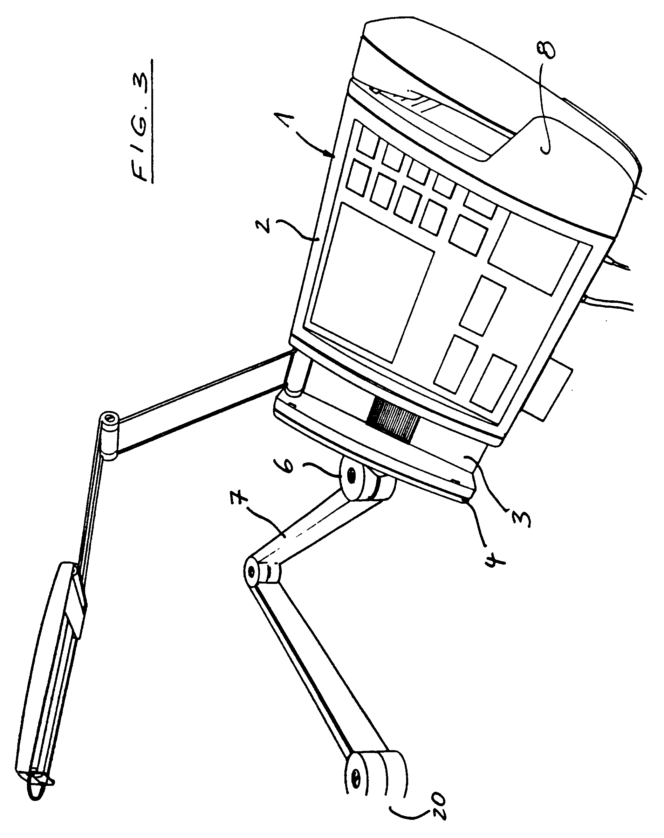

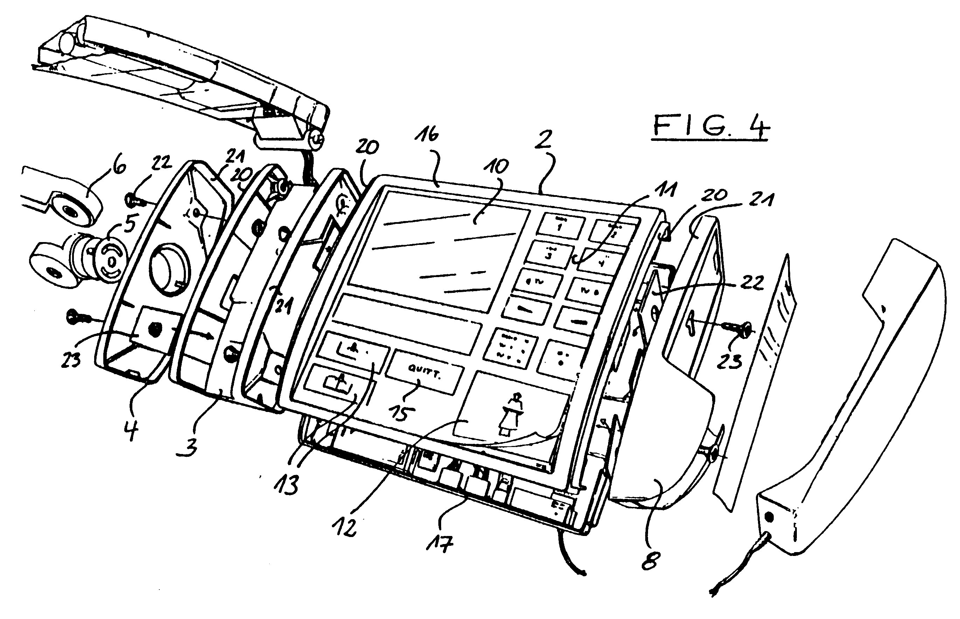

Es wird zuerst auf die Figuren 1 und 2 Bezug genommen. Das hier dargestellte Bediengerät 1 besitzt ein Gehäuse, in dem diverse Geräte bzw. eine entsprechende Verdrahtung untergebracht sind. Dieses Gehäuse ist über ein Gestänge 7 an einer Wand u. dgl. fixiert. Das Gestänge ist so ausgebildet, daß für das Bediengerät eine möglichst große Bewegungsfreiheit besteht.

Das Gehäuse des Bediengerätes 1 besteht aus einem kastenförmigen Hauptmodul 2 und drei leistenförmigen Nebenmodulen 3, 4 und 8. Diese Nebenmodulen sind seitlich am Hauptmodul 2 befestigt, wobei die Nebenmodulen 4 und 8 Abschlußmodulen darstellen, während der Nebenmodul 3 als Zwischenmodul ausgebildet ist. Mit 9 ist ein weiterer Nebenmodul bezeichnet, der als Handgriff ausgebildet ist und anstelle des Nebenmoduls 8 Verwendung finden kann.

Der Hauptmodul 2 bildet mit den Nebenmodulen 3, 4 und 8 im zusammengebauten Zustand ein einheitliches kompaktes Gehäuse, das etwa Kastenform besitzt, wie insbesondere die Unteransicht der Figur 2 zeigt. Die einzelnen Gehäuseteile, d.h. Modulen, sind aus einem hierfür geeigneten Kunststoff gefertigt. Derartige Kunststoffe sind dem Fachmann bekannt und brauchen daher an dieser Stelle nicht im einzelnen aufgeführt zu werden. Wie man den Figuren 1 und 2 desweiteren entnehmen kann, sind die Modulen so aneinandergesetzt, daß sich ebene Vorder-, Rück- und Seitenflächen ergeben. Die entsprechenden Kanten sind vorzugsweise abgerundet, damit sich das Gerät besser handhaben läßt und eine bessere Erscheinungsform erhält. Auch können insbesondere die Vorder und Rückfläche eine geringe Wölbung aufweisen.

Der Hauptmodul 2 setzt sich aus einem oberen schalenförmigen Bauteil 16 und einem unteren schalenförmigen Bauteil 17 zusammen, wie man Figur 2 entnehmen kann. Auf der Vorderfläche des oberen schalenförmigen Bauteils 16 sind ein Bildschirm 10 für einen LCD-Farbfernseher, eine Tastenmatrix 11, die diverse Bedientasten für den Farbfernseher sowie ein Radio enthält, eine Ruftaste 12 für Bedienungs- oder Pflegepersonal, zwei Lichttasten 13 und eine Quittungstaste 15 angeordnet. An der Unterseite des Hauptmoduls 2 befinden sich eine Kartenein/ausgabe-Einheit 14, diverse Steckanschlüsse 19 für Kabel und ein Lautsprecher 18. Mit den Bedientasten 13 läßt sich eine Lampe bedienen, die im Nebenmodul 3 untergebracht ist bzw. die als Nebenmodul 3 ausgebildet ist. Dieser Nebenmodul 3 setzt sich aus einer Lampenhalterung und der eigentlichen Lampe zusammen, die von der Halterung abschwenkbar ist, wie dies in Figur 3 gezeigt ist. Im eingeschwenkten Zustand fügt sich die Lampe vollständig in das Bediengerät ein, so daß hierdurch dessen Handhabbarkeit nicht nachteilig beeinträchtigt wird.

Der rechts neben dem Hauptmodul 2 angeordnete Nebenmodul 8 ist als Telefon ausgebildet, wobei der in der Figur untere Teil des Nebenmoduls nach außen erweitert ist und eine entsprechende Halterung für den Telefonhörer bildet. Anstatt eines derartigen Telefons kann auch ein vereinfachter Nebenmodul vorgesehen sein, der die Form eines Handgriffes besitzt, wie bei 9 gezeigt.

In Figur 1 links neben dem Nebenmodul 3 befindet sich ein weiterer Nebenmodul 4, der als Abschlußmodul ausgebildet ist und den Anschluß für die Halterung 7 des Bediengerätes aufweist. Hierzu besitzt der Nebenmodul 4 mittig einen nach außen vorstehenden Ringflansch, in den ein Gelenkzapfen eines Drehgelenkes 5 eingesetzt ist. Auf diese Weise kann das Bediengerät manuell um seine Horizontalachse gedreht werden. Der Gelenkzapfen geht in ein weiteres Drehgelenk 6 über, mittels dem das Bediengerät um eine Vertikalachse drehbar ist. Der genauere Aufbau des entsprechenden Gelenkgestänges wird in Verbindung mit den Figuren 3 und 4 erläutert.

Figur 4 zeigt den Aufbau des Bediengerätes 1 im Detail. Wie man der Figur entnehmen kann, sind die einzelnen Bauteile - beide Schalen 16 und 17 des Hauptmoduls 2 und die Nebenmodulen 3, 4 und 8 - über Steck- bzw. Klemmverbindungen in Verbindung mit Schraubverbindungen aneinandergesetzt. Der Anschluß der Nebenmodulen an den Hauptmodul sowie der Anschluß der Nebenmodulen untereinander erfolgt dabei über an den entsprechenden Seitenflächen angebrachte, vorstehende Klemmflansche 20, die in Vertiefungen am benachbarten Teil klemmend eingreifen. Beim Anschluß eines Nebenmoduls an den Hauptmodul braucht daher der Nebenmodul nur auf die Seitenfläche des Hauptmoduls gesteckt zu werden, so daß der entsprechende Klemmeingriff zwischen den Klemmflanschen und den Vertiefungen hergestellt wird. In Figur 1 ist auf der rechten Seitenfläche des Hauptmoduls ein Klemmflansch 20 dargestellt, über den ein Randflansch 21 des Nebenmoduls 8 greift. Nachdem der Nebenmodul 8 über den Klemmflansch 20 gesetzt worden ist, erfolgt eine endgültige Befestigung über Schrauben 23, die in entsprechende Bohrungen in Wänden bzw. Platten 22 des Hauptmoduls und Nebenmoduls eingreifen.

Wenn der Nebenmodul als Zwischenteil ausgebildet ist, wie dies bei dem Modul 3, der die Lampe trägt, gezeigt ist, so besitzt dieser auf der einen Seite einen gegenüber dem Rand zurückversetzten Klemmflansch 20 und auf der gegenüberliegenden Seite einen Randflansch 21, wobei bei dem dargestellten Ausführungsbeispiel der Randflansch 21 einen auf der zugehörigen Seitenfläche des Hauptmoduls 2 vorgesehenen Klemmflansch 20 übergreift, während der auf der gegenüberliegenden Seite des Nebenmoduls angeordnete Klemmflansch 20 von einem Randflansch 21 des entsprechenden Abschlußmoduls 4 übergriffen wird. Die Teile werden nach dem Zusammensetzen in entsprechender Weise aneinander geschraubt.

Das Gelenkgestänge 7 zur Halterung des Bediengerätes ist am besten in Figur 3 zu erkennen. Es umfaßt zwei Gestängeabschnitte, die durch ein mittleres Gelenk voneinander getrennt sind. Wie erwähnt, befindet sich am Befestigungspunkt des Gestänges an einer Wand u. dgl. ein Gelenk und am Verbindungspunkt mit dem Bediengerät ein entsprechendes Doppelgelenk. Die Gestänge- und entsprechenden Gelenkabschnitte sind hohl ausgebildet, so daß hierdurch Kabel in das Innere des Bediengerätes geführt werden können, wie bei 20 gezeigt.

In der vorstehenden Beschreibung wurde erläutert, daß das Bediengerät als bewegliche bzw. begrenzt bewegliche Einheit ausgebildet ist. Die Erfindung betrifft ebenfalls Fälle, bei denen ein an sich stationär eingebautes Gerät in begrenzter Weise bewegt werden kann, beispielsweise aus einer Vertiefung herausgeschwenkt werden kann oder um seine Horizontalachse gekippt werden kann, um die Handhabung und Bedienung des Gerätes zu erleichtern.

Wie bereits erwähnt, können die vorstehend beschriebenen Nebenmodulen im einfachsten Fall auch als bloße Abdeckplatte für den Hauptmodul ausgebildet sein. Unter dem Begriff "Zusatzgerät", das diese Nebenmodulen enthalten, sollen daher im weitesten Sinne auch sämtliche Zusatzeinrichtungen verstanden werden, die irgendeine Funktion erfüllen, wie beispielsweise Abdeckplatte, Halterungen, Griffeinrichtungen, Standfußeinrichtungen etc.

Die Halterung für das Bediengerät kann auch in der Form eines Standfusses ausgebildet sein. Es können auch zwei Standfüße zu beiden Seiten des Gerätes angeordnet sein.

Anstatt eines Lautsprechers oder zusätzlich zu einem Lautsprecher können auch ein Kopfhöreranschluß oder eine Gegensprechanlage vorgesehen sein.

Der vorstehend in Verbindung mit den Nebenmodulen verwendete Begriff "leistenförmig" ist ebenfalls weit auszulegen. Dieser Begriff soll auch solche Nebenmodulen umfassen, die ggf. eine größere Breite als Höhe besitzen. Solche Fälle werden jedoch selten sein und betreffen insbesondere Anwendungsfälle, bei denen zusätzliche Diagnosegeräte am Bediengerät vorgesehen sind. In diesem Zusammenhang schlägt die Erfindung auch vor, daß das Gerät mindestens einen Aufsteckmodul aufweist, der entweder auf den Hauptmodul oder einen Nebenmodul aufsteckbar ist und ohne Lösen einer permanenten Verbindung (Schraubverbindung) wieder abgezogen werden kann. Diese Ausführungsform eignet sich insbesondere für Diagnosegeräte, die als zusätzliche Geräte auf das Bediengerät aufgesteckt werden.

## Patentansprüche

1. Als bewegliche bzw. begrenzt bewegliche Einheit (1) ausgebildetes Bediengerät zur manuellen Steuerung einer Vielzahl von Funktionen unterschiedlicher Geräte, insbesondere für Krankenhäuser oder Hotels, mit einem Gehäuse, einer Vielzahl von Tasten (11, 12, 13, 15) zur Funktionssteuerung am Gehäuse und einer im Gehäuse untergebrachten Verdrahtung zur Signalweiterleitung an die Geräte und ggf. Signalverarbeitung,
dadurch gekennzeichnet, daß
das Gehäuse in Modulbauweise erstellt ist und einen die Vielzahl der Funktionstasten (11, 12, 13, 15) aufweisenden kastenförmigen Hauptmodul (2) und mindestens einen weiteren, austauschbaren und seitlich lösbar am Hauptmodul (2) befestigten leistenförmigen Nebenmodul (3, 4, 8) aufweist, der entweder als Zwischenmodul oder als Abschlußmodul ausgebildet ist,
im bzw. am Hauptmodul (2) selbst mindestens ein Gerät angeordnet ist, dessen Funktion durch manuelle Tastenbedienung gesteuert wird, und
der Nebenmodul (3, 4, 8) ebenfalls ein Gerät, dessen Funktion durch die manuelle Tastenbedienung gesteuert wird, und/oder ein unabhängiges Zusatzgerät enthält.

2. Bediengerät nach Anspruch 1, dadurch gekennzeichnet, daß Hauptmodul (2) und Nebenmodul (3, 4, 8) über eine Steck- bzw. bzw. Klemmverbindung und zusätzlich eine Schraubverbindung lösbar aneinander befestigt sind.

3. Bediengerät nach Anspruch 1 oder 2, dadurch gekennzeichnet, daß Hauptmodul (2) und Nebenmodul (3, 4, 8) über jeweils an einer Seitenfläche angeordnete vorstehende Klemmflansche (20) und/oder Vertiefungen zur Aufnahme der Klemmflansche (20) aneinander befestigt sind.

4. Bediengerät nach Anspruch 3, dadurch gekennzeichnet, daß der Nebenmodul (3, 4, 8) im Schnitt etwa C-förmig ausgebildet ist und mit seinen Randflanschen (21) von der Seitenfläche des Hauptmoduls (2) im Abstand vom Rand vorstehende Klemmflansche (20) übergreift, derart, daß die Randflansche (21) des Nebenmoduls und die Vorder- und Rückflächen des Hauptmoduls bündig sind.

5. Bediengerät nach Anspruch 4, dadurch gekennzeichnet, daß zur Ausbildung des Nebenmoduls (4, 8) als Abschlußmodul die Randflansche (21) in eine Abschluß- bzw. Abdeckwand übergehen.

6. Bediengerät nach Anspruch 4, dadurch gekennzeichnet, daß zur Ausbildung des Nebenmoduls (3) als Zwischenmodul die Randflansche (21) rechtwinklig in eine Zwischenwand übergehen, die im Abstand vom Rand mit entsprechenden vorstehenden Klemmflanschen (20) versehen ist.

7. Bediengerät nach einem der vorangehenden Ansprüche, dadurch gekennzeichnet, daß der Hauptmodul (2) beidseitig zum Anbringen von Nebenmodulen (3, 8) ausgebildet ist.

8. Bediengerät nach einem der Ansprüche 2 bis 7, dadurch gekennzeichnet, daß im Haupt- und/oder Nebenmodul zur Aufnahme der Schrauben (23) entsprechende Halteplatten (22) mit Schraubenbohrungen vorgesehen sind.

9. Bediengerät nach einem der vorangehenden Ansprüche, dadurch gekennzeichnet, daß der Hauptmodul (2) einen TV-Bildschirm (10), mindestens einen Lautsprecher (18) oder Kopfhöreranschluß, die Funktionstasten (11, 12, 13, 15) und eine Karteneingabe/ausgabe-Einheit (14) aufweist.

10. Bediengerät nach einem der vorangehenden Ansprüche, dadurch gekennzeichnet, daß ein Nebenmodul (8) als Telefon mit Halterung ausgebildet ist.

11. Bediengerät nach einem der vorangehenden Ansprüche, dadurch gekennzeichnet, daß ein Nebenmodul (3) als Lampenhalterung mit Lampe ausgebildet ist.

12. Bediengerät nach einem der vorangehenden Ansprüche, dadurch gekennzeichnet, daß ein Abschlußmodul (9) als Haltegriff ausgebildet ist.

13. Bediengerät nach einem der vorangehenden Ansprüche, dadurch gekennzeichnet, daß es eine Halterung zur Befestigung an einer Wand u. dgl. aufweist, die als Gelenkgestänge (7) ausgebildet ist.

14. Bediengerät nach Anspruch 13, dadurch gekennzeichnet, daß das Gelenkgestänge vier Gelenke aufweist.

15. Bediengerät nach Anspruch 13 oder 14, dadurch gekennzeichnet, daß es über ein Doppelgelenk (5, 6) mit dem Gelenkgestänge (7) verbunden ist, das eine Drehung des Gerätes (1) um seine Horizontalachse und eine Vertikalachse ermöglicht.

16. Bediengerät nach einem der Ansprüche 13 - 15, dadurch gekennzeichnet, daß es über einen Abschlußmodul (4) am Gelenkgestänge (7) befestigt ist, wobei das Gestänge (7) mit einem Drehzapfen drehbar in einer Axialbohrung des Abschlußmoduls (4) gelagert ist.

17. Bediengerät nach einem der Ansprüche 13 - 16, dadurch gekennzeichnet, daß das Gelenkgestänge (7) hohl ausgebildet ist und in seinem Inneren die zum Bediengerät (1) führenden Kabel (20) aufnimmt.

18. Bediengerät nach einem der Ansprüche 13 - 17, dadurch gekennzeichnet, daS das Gelenkgestänge (7) über eine Gasdruckmechanik an einer Wand u. dgl. befestigt ist.

19. Bediengerät nach einem der Ansprüche 1 - 12, dadurch gekennzeichnet, daß es eine Halterung zur Befestigung an einer Wand u. dgl. aufweist, die als biegsames Rohr (Schwanenhals) ausgebildet ist.

20. Bediengerät nach einem der Ansprüche 13 bis 15 und 17 bis 19, dadurch gekennzeichnet, daß die Halterung zur Befestigung an einer Wand u. dgl. an der Rückseite des Hauptmoduls montiert ist.

21. Bediengerät nach Anspruch 20, dadurch gekennzeichnet, daß die Rückseite des Hauptmoduls eine Erhebung aufweist, an der ein Gestängearm der Halterung fixiert ist.

## Claims

1. An operating device formed as movable unit (1) or as unit movable to a certain degree, for manual control of a plurality of functions of different devices, especially for hospitals or hotels, comprising a housing, a plurality of function keys (11, 12, 13, 15) for control on said housing and a wiring in said housing for transmission of signals to said devices and possibly for the processing of signals,
characterized in that
the housing is of a modular design and includes a box-like main module (2) including said plurality of function keys (11, 12, 13, 15) and at least one replaceable slat-like submodule (3, 4, 8) adapted to be laterally and removably fastened to said main module (2), said submodule being formed either as an intermediate module or as an end module,
at least one device is disposed within said main module (2) or at said main module, the function of said device being controlled by manual key operation, and
said submodule (3, 4, 8) contains also a device, the function of which being controlled by manual key operation, and/or an independent additional device.

2. The operating device according to claim 1, characterized in that said main module (2) and said submodule (3, 4, 8) are removably fastened to one another by means of a plug connection or clamping connection and additionally by means of a screw connection.

3. The operationg device according to claim 1 or 2, characterized in that said main module (2) and said submodule (3, 4, 8) are fastened with respect to one another by means of projecting clamping flanges (20) located at one lateral surface, respectively, and/or depressions for receipt of the clamping flanges (20).

4. The operating device according to claim 3, characterized in that said submodule (3, 4, 8) has a substantially C-shaped cross-section and engages with its edge flanges (21) over clamping flanges (20) projecting from the lateral surface of said main module (2) spaced from the edge in such a manner that the edge flanges (21) of said submodule and the front surfaces and back surfaces of the main module are flush.

5. The operating device according to claim 4, characterized in that the edge flanges (21) merge into an end wall or cover wall for the formation of the submodule (4, 8) as end module.

6. The operating device according to claim 4, characterized in that the edge flanges (21) merge with a right angle into an intermediate wall provided with corresponding projecting clamping flanges (20) spaced from the edge, for the formation of the submodule (3) as intermediate module.

7. The operating device according to one of the preceding claims, characterized in that the main module (2) is formed on both sides for the arrangement of submodules (3, 8).

8. The operating device according to one of the claims 2 to 7, characterized in that corresponding retention plates (22) with screw bores are provided in the main module and/or the submodule for the receipt of the screws (23).

9. The operating device according to one of the preceding claims, characterized in that said main module (2) comprises a TV-screen (10), at least one loudspeaker (18) or headphone terminal, said function keys (11, 12, 13, 15) and a card input/output unit (14).

10. The operating device according to one of the preceding claims, characterized in that a submodule (8) is formed as telephone with holding device.

11. The operating device according to one of the preceding claims, characterized in that a submodule (3) is formed as lamp holding device with a lamp.

12. The operating device according to one of the preceding claims, characterized in that an end module (9) is formed as a handle.

13. The operating device according to one of the preceding claims, characterized in that it includes holding means for fastening to a wall etc. which is formed as a hinge linkage (7).

14. The operating device according to claim 13, characterized in that said hinge linkage has four hinges.

15. The operating device according to claim 13 or 14, characterized in that it is connected with said hinge linkage by means of a double hinge (5, 6) enabling turning of said housing about a horizontal axis and a vertical axis.

16. The operating device according to one of the claims 13 - 15, characterized in that it is fastened to said hinge linkage (7) by means of an end module (4), said linkage (7) being rotatably mounted with a pivot pin in an axial bore of said end module (4).

17. The operating device according to one of the claims 13 - 16, characterized in that said hinge linkage (7) is hollow and contains in its interior the cables (20) leading to the operating unit (1).

18. The operating device according to one of the claims 13 - 17, characterized in that said hinge linkage (7) is fastened to a wall etc. by means of a gas pressure arrangement.

19. The operating device according to one of the claims 1 - 12, characterized in that it includes a holding device for fastening to a wall etc. which is formed as bendable tube (swan's neck).

20. The operating device according to the claims 13 to 15 and 17 to 19, characterized in that said holding device for fastening to a wall etc. is mounted at the backside of said main module.

21. The operating device according to claim 20, characterized in that the backside of said main module has an elevation at which a linkage arm of the holding device is fixed.

## Revendications

1. Appareil de contrôle ayant la forme d'une unité (1) mobile ou partiellement mobile pour la commande manuelle d'un grand nombre de fonctions de divers appareils, en particulier pour hôpitaux ou hôtels, comportant un boîtier, un grand nombre de touches (11, 12, 13, 15) sur le boîtier pour la commande des fonctions et un câblage disposé dans le boîtier pour la retransmission de signaux aux appareils et le cas échéant le traitement des signaux,
caractérisé en ce que
le boîtier est construit de façon modulaire et comporte un module principal (2) en forme de caisson présentant un grand nombre de touches de fonction (11, 12, 13, 15) et au moins un module secondaire (3, 4, 8) supplémentaire interchangeable en forme de latte et fixé latéralement de manière amovible au module principal (2), et qui constitue soit un module intermédiaire soit un module terminal,
au module principal (2) lui-même où, dans celui-ci, au moins un appareil est placé, dont la fonction est commandée par manipulation des touches, et
le module secondaire (3, 4, 8) contient également un appareil, dont la fonction est commandée par la manipulation des touches, et/ou un appareil supplémentaire indépendant.

2. Appareil de contrôle suivant la revendication 1, caractérisé en ce que le module principal (2) et le module secondaire (3, 4, 8) sont fixés l'un à l'autre de manière amovible par un connecteur à fiches ou un accouplement à serrage, en plus d'un connecteur vissé.

3. Appareil de contrôle suivant la revendication 1 ou 2, caractérisé en ce que le module principal (2) et le module secondaire (3, 4, 8) sont fixés l'un à l'autre via des brides de serrage (20) montées en saillie et/ou des renfoncements pour réception des brides de serrage (20) disposés respectivement sur une face latérale.

4. Appareil de contrôle suivant la revendication 3, caractérisé en ce que le module secondaire (3, 4, 8) présente une section plus ou moins en forme de C et recouvre avec ses brides d'extrémité (21) des brides de serrage (20) dépassant de la surface latérale du module principal (2) à une certaine distance du bord de telle façon que les brides d'extrémité (21) du module secondaire et les surfaces avant et arrière du module principal affleurent.

5. Appareil de contrôle suivant la revendication 4, caractérisé en ce que les brides d'extrémité (21) se terminent par une paroi terminale ou de recouvrement afin que le module secondaire (4, 8) constitue un module terminal.

6. Appareil de contrôle suivant la revendication 4, caractérisé en ce que les brides d'extrémité (21) se terminent à angle droit par une paroi intermédiaire, qui est pourvue de brides de serrage (20) correspondantes à une certaine distance du bord, afin que le module secondaire (3) constitue un module intermédiaire.

7. Appareil de contrôle suivant l'une quelconque des revendications précédentes, caractérisé en ce que le module principal (2) est conformé des deux côtés de manière à recevoir des modules secondaires (3, 8).

8. Appareil de contrôle suivant l'une quelconque des revendications 2 à 7, caractérisé en ce que des plaques de fixation (22) appropriées avec trous taraudés sont disposées dans le module principal et/ou le module secondaire pour recevoir les vis (23).

9. Appareil de contrôle suivant l'une quelconque des revendications précédentes, caractérisé en ce que le module principal (2) présente un écran TV (10), au moins un haut-parleur (18) ou raccord pour casque d'écoute, les touches de fonction (11, 12, 13, 15) et une carte d'unité entrée-sortie (14).

10. Appareil de contrôle suivant l'une quelconque des revendications précédentes, caractérisé en ce qu'un module secondaire (8) est réalisé sous forme d'un téléphone avec support.

11. Appareil de contrôle suivant l'une quelconque des revendications précédentes, caractérisé en ce qu'un module secondaire (3) est réalisé sous forme d'un support de lampe avec lampe.

12. Appareil de contrôle suivant l'une quelconque des revendications précédentes, caractérisé en ce qu'un module terminal (9) est réalisé sous forme de poignée de maintien.

13. Appareil de contrôle suivant l'une quelconque des revendications précédentes, caractérisé en ce qu'il présente un support pour fixation à une paroi ou équivalent, qui a la forme d'une barre articulée (7).

14. Appareil de contrôle suivant la revendication 13, caractérisé en ce que la barre articulée comporte quatre articulations.

15. Appareil de contrôle suivant la revendication 13 ou 14, caractérisé en ce qu'il est lié par une articulation double (5, 6) à la barre articulée (7), qui permet une rotation de l'appareil (1) autour de son axe horizontal et d'un axe vertical.

16. Appareil de contrôle suivant l'une quelconque des revendications 13-15, caractérisé en ce qu'il est fixé par l'intermédiaire d'un module terminal (4) à la barre articulée (7), la barre articulée (7) étant reliée de manière permettant la rotation par un tourillon inséré dans un percement axial du module terminal (4).

17. Appareil de contrôle suivant l'une quelconque des revendications 13-16, caractérisé en ce que la barre articulée (7) est creuse et son intérieur sert de logement pour les câbles (20) conduisant à l'appareil de contôle (1).

18. Appareil de contrôle suivant l'une quelconque des revendications 13-17, caractérisé en ce que la barre articulée (7) est fixée à une paroi ou équivalent par l'intermédiaire d'un mécanisme à pression de gaz.

19. Appareil de contrôle suivant l'une quelconque des revendications 1-12, caractérisé en ce qu'il présente un support pour fixation à une paroi ou équivalent qui a la forme d'un tuyau flexible (col de cygne).

20. Appareil de contrôle suivant l'une quelconque des revendications 13 à 15 et 17 à 19, caractérisé en ce que le support pour fixation à une paroi ou équivalent est monté à la face arrière du module principal.

21. Appareil de contrôle suivant la revendication 20, caractérisé en ce que la face arrière du module principal présente un bossage auquel un bras articulé du support est fixé.
